# EUROPEAN PATENT SPECIFICATION

(11) **EP 3 617 874 B1**
(45) Date of publication and mention of the grant of the patent: **05.01.2022**
(21) Application number: 18191496.1
(22) Date of filing: 29.08.2018
(51) Int. Cl.: G06F 7/58

(54) **METHOD AND APPARATUS FOR GENERATING A RANDOM NUMBER**
VERFAHREN UND VORRICHTUNG ZUR ERZEUGUNG EINER ZUFALLSZAHL
PROCÉDÉ ET APPAREIL POUR GÉNÉRER UN NOMBRE ALÉATOIRE

(43) Date of publication of application: 04.03.2020
(73) Proprietor: Vestel Elektronik Sanayi ve Ticaret A.S., 45030 Manisa (TR)
(72) Inventor: DÖNER, Çagdas, 45030 Manisa (TR)
(74) Representative: Flint, Adam

(56) References cited:
- SZCZEPANSKI J ET AL: "Biometric random number generators", COMPUTERS & SECUR, ELSEVIER SCIENCE PUBLISHERS. AMSTERDAM, NL, vol. 23, no. 1, 1 February 2004 (2004-02-01), pages 77-84, XP004491777, ISSN: 0167-4048, DOI: 10.1016/S0167-4048(04)00064-1
- MARIOS BELK ET AL: "CogniMouse", HUMAN FACTORS IN COMPUTING SYSTEMS, ACM, 2 PENN PLAZA, SUITE 701 NEW YORK NY 10121-0701 USA, 18 April 2015 (2015-04-18), pages 1019-1024, XP058069212, DOI: 10.1145/2702613.2732881 ISBN: 978-1-4503-3146-3
- ZHU HEGUI ET AL: "A novel iris and chaos-based random number generator", COMPUTERS & SECURITY, ELSEVIER SCIENCE PUBLISHERS. AMSTERDAM, NL, vol. 36, 26 February 2013 (2013-02-26), pages 40-48, XP028581219, ISSN: 0167-4048, DOI: 10.1016/J.COSE.2013.02.003

## Description

### Technical Field

The present disclosure relates to an apparatus and method for generating a random number.

### Background

A number of applications require random numbers, i.e. numbers that cannot feasibly be predicted. For example, random numbers are used in statistical sampling to ensure that members of a population have an equal chance of being selected. In computer simulation, random numbers may be used to model real-world scenarios such as, for example, collisions between molecules or the nuclear decay of atoms. Random numbers are particularly important in the fields of computer security and cryptography, where random numbers are used to generate passwords, PINs (personal identification numbers), encryption keys and the like. Random number generation is the process of generating random numbers for use in these and other fields.

Pseudorandom number generators use an algorithm to produce sequences of seemingly random numbers. A pseudorandom number generator generates a sequence of numbers based on a seed number. The generated sequence of numbers is not truly random because it is completely determined by the initial seed number. Whilst an advantage of pseudorandom number generators is that many pseudorandom numbers are generated in a short time, if the starting point or seed in the sequence is known, those numbers can be reproduced later. This opens up the possibility of malicious software or persons to hack into a computer (or other electronic device) to, for example, steal personal details, financial information, etc.

On the other hand, "true" random numbers produced by "true" random number generators are impossible (or at least significantly more difficult) to predict.

Szczepanki J et al.: "Biometric random number generators", Computers & Security, Elsevier Science Publishers, Amsterdam, NL, vol. 23, no. 1, 1 February 2004, p. 77-84 discloses obtaining measurements of human galvanic skin response to generate random numbers.

Marios Belk et al.: "CogniMouse", Human Factors in Computing Systems, ACM, 2 Penn Plaza, Suite 701, New York, NY, 10121-0701 USA, 18 April 2015, p.1019-1024 discloses a method of analysing users' computer mouse interaction data with the aim to implicitly identify task completion difficulty.

Zhu Hegui et al.: "A novel iris and chaos-based random number generator", Computers & Security, Elsevier Science Publishers, Amsterdam, NL, vol. 43, 26 February 2013, p. 40-48 discloses using iris data as an input to a random number generator.

Elaine Barker & John Kelsey: "Recommendation for Random Number Generation Using Deterministic Random Bit Generators", NIST Special Publication 800-90 A, Revision 1, June 2015 discloses periodic reseeding of a pseudorandom number generator.

### Summary

According to a first aspect disclosed herein, there is provided apparatus comprising: a measurement device constructed and arranged to measure an electrical body resistance of a user to generate a measurement result; and a controller configured to receive the measurement result and to generate a random number based on the measurement result. The measurement device is provided by an input device via which a user can input commands, the input device comprising one or more electrically conductive surfaces which are physically contactable by a user to enable the electrical body resistance of said user to be measured, and wherein the input device is at least one of: a keyboard, a mouse, and a touch pad.

An advantage of this is that the random numbers are generated based on data that is external to the apparatus. The electrical body resistance of the user cannot be predicted, by software or other techniques. Instead, the electrical body resistance, which is unique to a given user, can only be measured with a physical device. A remote hacker is therefore unable to obtain the measurement result on which the random numbers are based. This therefore enables the generation of random numbers or pseudorandom numbers that are less susceptible to prediction by malicious parties.

In an example, the controller comprises a random number generator and is configured to input the measurement result into the random number generator to generate the random number.

In an example, the random number generator is a pseudorandom number generator, and wherein the controller is configured to input the measurement result as a seed number to the pseudorandom number generator to cause the pseudorandom number generator to generate a pseudorandom number.

In an example, the measurement device is configured to measure the electrical body resistance of a user to generate a plurality of measurement results, each measurement result corresponding to the electrical body resistance of the user at a different time, and wherein the controller is configured to input a second one of the plurality of measurement results as a seed number to the pseudorandom number generator to cause the pseudorandom number generator to generate a second pseudorandom number.

According to a second aspect disclosed herein, there is provided a method of generating a random number, the method comprising: measuring an electrical body resistance of a user to generate a measurement result; and generating a random number based on the measurement result. Measuring the body resistance comprises measuring the electrical body resistance of the user via one or more electrically conductive surfaces of an input device which are in physical contact with the user. The input device is at least one of: a keyboard, a mouse, and a touch pad.

In an example, generating the random number comprises inputting the measurement result into a random number generator to generate the random number.

In an example, the random number generator is a pseudorandom number generator, and wherein generating the random number comprises inputting the measurement result as a seed number to the pseudorandom number generator to generate a pseudorandom number.

In an example, measuring the electrical body resistance of a user to generate a plurality of measurement results, each measurement result corresponding to the electrical body resistance of the user at a different time, wherein generating the random number comprises inputting a second one of the plurality of measurement results as a seed number to the pseudorandom number generator to generate a second pseudorandom number.

### Brief Description of the Drawings

To assist understanding of the present disclosure and to show how embodiments may be put into effect, reference is made by way of example to the accompanying drawings in which:

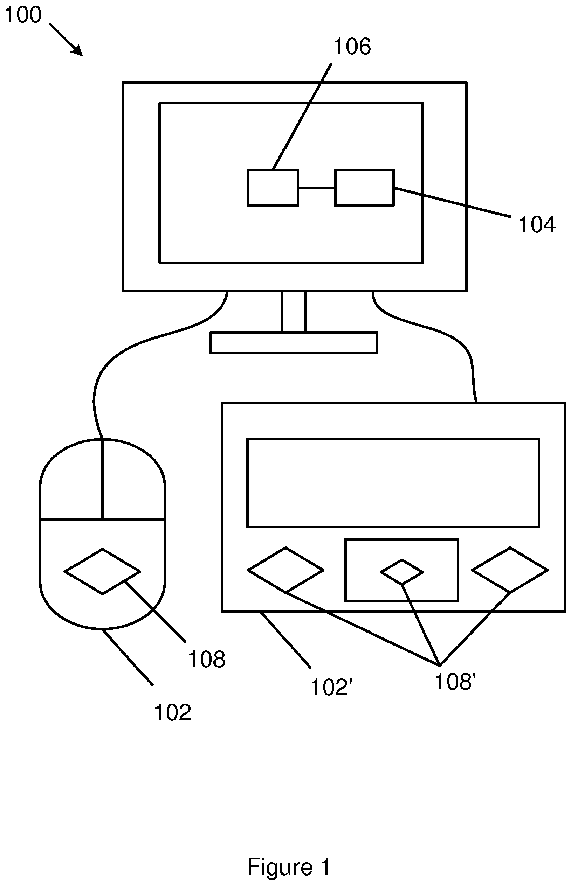

Figure 1 shows schematically an example of apparatus for generating a random number based on a measured electrical body resistance of a user.

### Detailed Description

Today, security issues are constraining the development of, for example, network based applications, serverless architectures and Internet of Things (IoT) systems. The development of these systems is hampered by a lack of truly random numbers. Random numbers are required by these systems and across other fields (e.g. computer security, cryptography, etc.), as discussed briefly above. Examples described herein provide a source of truly random numbers based on user-specific information, specifically their electrical body resistance, which offers an alternative to predictable, purely software generated numbers (including for example pseudorandom numbers). In particular examples, IoT devices having hardware limitations may harvest a source of randomness via user interaction.

Figure 1 illustrates an example of an apparatus 100 for generating random numbers. The apparatus 100 has a measurement device 102 and a controller 104.

The measurement device 102 and the controller 104 may be provided together in a single, integrated apparatus 100. For example, the measurement device 102 and the controller 104 may be provided as parts of a laptop or notebook computer, a "smart" phone, etc. Alternatively or additionally, the measurement device 102 and the controller 104 may be provided as separate items (as shown by way of example in Figure 1). For example, the measurement device 102 may be provided as part of some input device, such as a mouse or touchpad or the like, and the controller 104 may be provided as a part of a computing device with which the measurement device 102 is in wireless and/or wired communication.

The apparatus 100 may be or include, for example, a media device such as a television set, a display screen or panel, a set top box, a PVR (personal video recorder, also known as a DVR or digital video recorder), a DVD player, a Blu Ray player, a personal computing device such as a laptop or desktop or tablet computer, a video game console, a cellular phone (including a so-called "smart phone"), a media player, etc. Additionally or alternatively, the apparatus 100 may be an Internet of Things (IoT) device. In general, as used herein, an IoT is a device that has an addressable interface (e.g. an Internet protocol (IP) address, a Bluetooth identifier (ID), a near-field communication (NFC) ID, etc.) and can transmit information to one or more other devices over a wired or wireless connection. IoT devices may in general include or be incorporated in for example sensors, refrigerators, ovens, microwaves, freezers, dishwashers, clothes washing machines, clothes dryers, furnaces, air conditioners, thermostats, televisions and other consumer electronic devices, light fixtures, vacuum cleaners, sprinklers, electricity meters, gas meters, etc.

In some examples, the measurement device 102 may be provided by or as part of an input device 102. The input device 102 allows the user to input commands. The input device 102 may, in some examples, be a mouse 102 (e.g. for controlling a desktop computer or laptop computer), a keyboard 102' (e.g. of a desktop computer or a laptop), a touch pad (e.g. of a laptop computer or a standalone touchpad that is connected wirelessly or by wired connection to another device), etc.

The input device 102 may allow the user to control the apparatus 100. For example, a mouse 102 or keyboard 102' may control a desktop computer. Additionally or alternatively, the input device 102 may allow the user to control a different apparatus (e.g. one which is connected to the input device and/or the apparatus via a wired or wireless connection). For example, the input device 102 may be a remote control which controls a media device such as, for example, a television set.

The measurement device 102 may in general be any device that is configured to measure an electrical body resistance of a (human) user to generate a measurement result. The controller 104, which may be for example a processor, is operatively coupled to the measurement device 102. The controller 104 is configured to receive a measurement result from the measurement device 102 and generate a random number based on that measurement result. The controller 104 may also be operatively coupled to data storage 106.

The measurement device 102 in this example has one or more electrically conductive surfaces 108 which are physically contactable by the user. For example, the electrically conductive surfaces 108 may be metal strips or contact pads or the like. The electrically conductive surfaces 108 are in use connected to an instrument such as, for example, a multimeter or an impedance meter (e.g. a bio-impedance analysis meter), which may be housed within the measurement device 102 or provided separately.

The one or more electrically conductive surfaces 108 may be located on one or more surfaces of the input device 102. For example, as shown in Figure 1, one example input device 102 has a single conductive surface 108. On the other hand, the other example input device 102' has multiple conductive surfaces 108'.

As an optional feature, the or each electrically conductive surface 108 may be located in positions on the input device 102 that are intended to be held or touched by the user during operation of that device (e.g. in ergonomic positions). For example, if the input device 102 is a mouse, the conductive surfaces 108 may be placed at the sides of the mouse, or on the "click" pads, or on the main surface of the mouse where a user's palm rests in use. As another example, if the input device 102 is a keyboard or touch pad, the conductive surfaces 108 may be placed on one, some or all of the keys or pads of the input device 102, and/or in a region of the input device 102 in which a user may rest their hands or palms in use. In general, the electrically conductive surfaces 108 may be positioned over any buttons, pads, switches, triggers, handles or other surfaces that are interacted with or touched by the user.

The human body has resistance to current flow. The human body has both skin resistance and (internal) body resistance, with the total resistance of the body being equal to the body resistance plus twice the skin resistance (i.e. the total resistance from the skin, through the body and through the skin again). The majority of the body's resistance to electric current flow is at the skin (typically up to around 100,000 Ω, though as low as around 1000 Ω for wet or sweaty skin), whereas internal body resistance is about 300 Ω, and is related to the wet, relatively salty tissues beneath the skin.

Skin resistance varies with inter alia the state of sweat glands in the skin. Sweating is controlled by the sympathetic nervous system, and skin conductance is an indication of psychological or physiological arousal. If the sympathetic branch of the autonomic nervous system is highly aroused, then sweat gland activity also increases, which in turn increases skin conductance. In this way, skin conductance can be a measure of emotional and sympathetic responses.

In contrast, body resistance is influenced by, amongst other factors, the body's water content, body fat percentage, muscle percentage, and the flow of blood through the body. That is, the body resistance is influenced by the internal make-up of the human body and not by, for example, the human's emotional state.

The electrical body resistance of the user may be measured by introducing a small (alternating or direct) electrical current into the body (e.g. via the electrically conductive surfaces 108 discussed above) and measuring the potential difference that results. The electrical body resistance is the ratio of the magnitude of the potential difference to the magnitude of the current. The electrical body resistance of the human body varies with the frequency of the applied current. As an example, a typical current used may be 1 to 10 µA and the typical frequency used may be above 10 kHz. These values result in an applied current that is below the human perception threshold by approximately a factor of at least one thousand. Furthermore, the electric fields that are induced in the body at these values are far below the electrical susceptibility limits of devices such as pacemakers or implantable defibrillator-converters.

In some examples, to avoid electrode polarization and to minimize the effects of the resistance of skin beneath the electrodes, the measurement device 102 may comprise a plurality of electrically conductive surfaces (or electrodes) 108, with one or more of the electrodes 108 passing current into the body and one or more of the electrodes 108 that are not passing current into the body sensing the resulting voltage drop. In one example, two electrodes 108 may be used to pass current into the body and two electrodes may be used to sense the voltage drop.

The controller 104 may comprise a random number generator, which may be implemented in software and/or hardware. The measurement result itself, i.e. the measure of the electrical body resistance of a user, may be input to the random number generator by the controller 104 to cause a random number to be generated. In an example, the random number may be the measurement result. That is, the received measurement result may be appropriately converted by the random number generator and output as the desired random number. Alternatively, the random number generator may generate a random number by modifying the measurement result. For example, the random number generator may take part of the measurement result as the random number (e.g. a subset of the digits that make up the measurement result in the case that the measurement result is digitised). Either way, an advantage of this is that the random number is truly random in the sense that it cannot be predicted since it is based on a user-specific body measurement.

Optionally, the random number generator may be a pseudorandom number generator. The measurement result may be input to the pseudorandom number generator by the controller 104 to generate a pseudorandom number. Here, the measurement result acts a seed number for the pseudorandom number generator. Pseudorandom number generators are implemented through programming based on deterministic computation. A pseudorandom number generator applies an algorithm to the seed number to generate one or more pseudorandom numbers. It will always produce the same sequence when initialized with the same seed number. The pseudorandom number generator may generate a sequence of pseudorandom numbers from the seed number. The number of pseudorandom numbers generated is controlled by the pseudorandom number generator and may be user defined. An advantage of using the measurement result as a seed number is that a large number of pseudorandom numbers may be generated in a small amount of time, i.e. requiring only a single measure of the electrical body resistance of the user. Whilst the pseudorandom numbers are not truly random, the seed number is a user-specific measurement result and therefore cannot be predicted by for example a hacker or malicious software. Therefore, even if the particular algorithm used by the pseudorandom number generator is compromised, the hacker or software would still not be able to predict the seed number that is input into the pseudorandom number generator. Without knowledge of the seed number, the particular pseudorandom numbers generated by a known algorithm still cannot be predicted.

In some examples, the controller 104 may first format and align the measurement result(s) into a particular data format to feed the random number generator. For example, the controller 104 may digitise the measurement result(s) to present the result(s) as a string of binary 0s and Is. The controller 104 may also set at least a lower boundary and optionally an upper boundary on the size of the formatted measurement result(s). The setting of a suitably high threshold for the lower boundary assists in preventing a hacker or malicious software "guessing" the value of the formatted measurement result(s).

The measurement device 102 may be configured, for example by the user, to measure the electrical body resistance of the user continuously, periodically, at irregular intervals or in response to a user-defined or apparatus-defined trigger.

The measurement device 102 may also be configured, for example by the user, to generate a plurality of measurement results. Each measurement result may be taken at a different moment in time. For example, the measurement device 102 may measure the electrical body resistance of the user at regular intervals (e.g. every second). The controller 104 may input a different measurement result (i.e. a measurement obtained at a later point in time) to the random number generator to generate a different random number. For instance, the controller 104 may input a different measurement result as a seed number to the pseudorandom number generator to generate a different pseudorandom number (or a different sequence of pseudorandom numbers). An advantage of this is that the seed number may be updated (e.g. periodically) to generate fresh pseudorandom numbers.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory (e.g. a solid-state drive or SSD).

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. Apparatus (100) comprising:
an input device (102) via which a user can input commands,
a measurement device (102) constructed and arranged to measure an electrical body resistance of a user to generate a measurement result, wherein the measurement device (102) is provided as part of the input device (102), the input device (102) comprising one or more electrically conductive surfaces (108) which are physically contactable by a user to enable the electrical body resistance of said user to be measured, wherein the input device (102) is at least one of: a keyboard, a mouse, and a touch pad; and
a controller (104) configured to receive the measurement result and to generate a random number based on the measurement result.

2. Apparatus (100) according to claim 1, wherein the controller (104) comprises a random number generator and is configured to input the measurement result into the random number generator to generate the random number.

3. Apparatus (100) according to claim 2, wherein the random number generator is a pseudorandom number generator, and wherein the controller (104) is configured to input the measurement result as a seed number to the pseudorandom number generator to cause the pseudorandom number generator to generate a pseudorandom number.

4. Apparatus (100) according to claim 3, wherein the measurement device (102) is configured to measure the electrical body resistance of a user to generate a plurality of measurement results, each measurement result corresponding to the electrical body resistance of the user at a different time, and wherein the controller (104) is configured to input a second one of the plurality of measurement results as a seed number to the pseudorandom number generator to cause the pseudorandom number generator to generate a second pseudorandom number.

5. A method of generating a random number, the method comprising:
measuring an electrical body resistance of a user to generate a measurement result, wherein the measuring the body resistance comprises measuring the electrical body resistance of the user via one or more electrically conductive surfaces (108) of an input device (102) which are in physical contact with the user, wherein the input device (102) is at least one of: a keyboard, a mouse, and a touch pad; and
generating a random number based on the measurement result.

6. A method according to claim 5, wherein generating the random number comprises inputting the measurement result into a random number generator to generate the random number.

7. A method according to claim 6, wherein the random number generator is a pseudorandom number generator, and wherein generating the random number comprises inputting the measurement result as a seed number to the pseudorandom number generator to generate a pseudorandom number.

8. A method according to claim 7, comprising measuring the electrical body resistance of a user to generate a plurality of measurement results, each measurement result corresponding to the electrical body resistance of the user at a different time, wherein generating the random number comprises inputting a second one of the plurality of measurement results as a seed number to the pseudorandom number generator to generate a second pseudorandom number.

## Patentansprüche

1. Vorrichtung (100), aufweisend:
eine Eingabevorrichtung (102), über die ein Benutzer Befehle eingeben kann,
eine Messvorrichtung (102), die konstruiert und angeordnet ist, um einen elektrischen Körperwiderstand eines Benutzers zu messen, um ein Messergebnis zu erzeugen, wobei die Messvorrichtung (102) als Teil der Eingabevorrichtung (102) vorgesehen ist, wobei die Eingabevorrichtung (102) ein oder mehr elektrisch leitfähige Oberflächen (108) aufweist, die durch einen Benutzer physisch kontaktierbar sind, um zu ermöglichen, dass der elektrische Körperwiderstand des Benutzers gemessen wird, wobei die Eingabevorrichtung (102) wenigstens eines ist von: einer Tastatur, einer Maus und einem Touchpad; und
eine Steuerung (104), die konfiguriert ist, um das Messergebnis zu empfangen und basierend auf dem Messergebnis eine Zufallszahl zu erzeugen.

2. Vorrichtung (100) nach Anspruch 1, bei welcher die Steuerung (104) einen Zufallszahlengenerator aufweist und konfiguriert ist, um das Messergebnis in den Zufallszahlengenerator einzugeben, um die Zufallszahl zu erzeugen.

3. Vorrichtung (100) nach Anspruch 2, bei welcher der Zufallszahlengenerator ein Pseudozufallszahlengenerator ist, und bei welcher die Steuerung (104) konfiguriert ist, um das Messergebnis als eine Startzahl an den Pseudozufallszahlengenerator einzugeben, um den Pseudozufallszahlengenerator eine Pseudozufallszahl erzeugen zu lassen.

4. Vorrichtung (100) nach Anspruch 3, bei welcher die Messvorrichtung (102) konfiguriert ist, um den elektrischen Körperwiderstand eines Benutzers zu messen, um mehrere Messergebnisse zu erzeugen, wobei jedes Messergebnis dem elektrischen Körperwiderstand des Benutzers zu einer anderen Zeit entspricht, und bei welcher die Steuerung (104) konfiguriert ist, um eine zweite der mehreren Messergebnissen als eine Startzahl an den Pseudozufallszahlengenerator einzugeben, um den Pseudozufallszahlengenerator eine zweite Pseudozufallszahl erzeugen zu lassen.

5. Verfahren zum Erzeugen einer Zufallszahl, wobei das Verfahren aufweist:
Messen eines elektrischen Körperwiderstandes eines Benutzers, um ein Messergebnis zu erzeugen, wobei das Messen des Körperwiderstandes ein Messen des elektrischen Körperwiderstands des Benutzers über eine oder mehr elektrisch leitfähige Oberflächen (108) einer Eingabevorrichtung (102), die in physischem Kontakt mit dem Benutzer stehen, aufweist, wobei die Eingabevorrichtung (102) wenigstens eines ist von: einer Tastatur, einer Maus und einem Touchpad; und
Erzeugen einer Zufallszahl basierend auf dem Messergebnis.

6. Verfahren nach Anspruch 5, bei welchem das Erzeugen der Zufallszahl ein Eingeben des Messergebnisses in einen Zufallszahlengenerator aufweist, um die Zufallszahl zu erzeugen.

7. Verfahren nach Anspruch 6, bei welchem der Zufallszahlengenerator ein Pseudozufallszahlengenerator ist, und bei welchem das Erzeugen der Zufallszahl ein Eingeben des Messergebnisses als eine Startzahl an den Pseudozufallszahlengenerator aufweist, um eine Pseudozufallszahl zu erzeugen.

8. Verfahren nach Anspruch 7, aufweisend ein Messen des elektrischen Körperwiderstandes eines Benutzers, um mehrere Messergebnisse zu erzeugen, wobei jedes Messergebnis dem elektrischen Körperwiderstand des Benutzers zu einer anderen Zeit entspricht, wobei das Erzeugen der Zufallszahl ein Eingeben eines zweiten der mehreren Messergebnisse als eine Startzahl an den Pseudozufallszahlengenerator aufweist, um eine zweite Pseudozufallszahl zu erzeugen.

## Revendications

1. Appareil (100) comprenant :
un dispositif de saisie (102) par l'intermédiaire duquel un utilisateur peut saisir des commandes ;
un dispositif de mesure (102) qui est construit et agencé pour mesurer une résistance électrique du corps d'un utilisateur afin de générer un résultat de mesure, dans lequel le dispositif de mesure (102) se présente comme une partie du dispositif de saisie (102), le dispositif de saisie (102) comprenant une ou plusieurs surfaces électriquement conductrices (108) qui peuvent être mises physiquement en contact avec un utilisateur pour permettre de mesurer la résistance électrique du corps dudit utilisateur, dans lequel le dispositif de saisie (102) est au moins l'un de : un clavier, une souris et un pavé tactile ; et
un contrôleur (104) qui est configuré pour recevoir le résultat de mesure et pour générer un nombre aléatoire sur la base du résultat de mesure.

2. Appareil (100) selon la revendication 1, dans lequel le contrôleur (104) comprend un générateur de nombres aléatoires et est configuré pour saisir le résultat de mesure dans le générateur de nombres aléatoires afin de générer le nombre aléatoire.

3. Appareil (100) selon la revendication 2, dans lequel le générateur de nombres aléatoires est un générateur de nombres pseudo-aléatoires, et dans lequel le contrôleur (104) est configuré pour saisir le résultat de mesure en tant que nombre de départ dans le générateur de nombres pseudo-aléatoires afin d'amener le générateur de nombres pseudo-aléatoires à générer un nombre pseudo-aléatoire.

4. Appareil (100) selon la revendication 3, dans lequel le dispositif de mesure (102) est configuré pour mesurer la résistance électrique du corps d'un utilisateur afin de générer une pluralité de résultats de mesure, chaque résultat de mesure correspondant à la résistance électrique du corps de l'utilisateur à un moment différent, et dans lequel le contrôleur (104) est configuré pour saisir un deuxième résultat de mesure parmi la pluralité de résultats de mesure en tant que nombre de départ dans le générateur de nombres pseudo-aléatoires afin d'amener le générateur de nombres pseudo-aléatoires à générer un deuxième nombre pseudo-aléatoire.

5. Procédé de génération d'un nombre aléatoire, le procédé consistant à :
mesurer une résistance électrique du corps d'un utilisateur pour générer un résultat de mesure, dans lequel la mesure de la résistance du corps consiste à mesurer la résistance électrique du corps de l'utilisateur par l'intermédiaire d'une ou plusieurs surfaces électriquement conductrices (108) d'un dispositif de saisie (102) qui sont en contact physique avec l'utilisateur, dans lequel le dispositif de saisie (102) est au moins l'un de : un clavier, une souris et un pavé tactile ; et
générer un nombre aléatoire sur la base du résultat de mesure.

6. Procédé selon la revendication 5, dans lequel la génération du nombre aléatoire consiste à saisir le résultat de mesure dans un générateur de nombres aléatoires pour générer le nombre aléatoire.

7. Procédé selon la revendication 6, dans lequel le générateur de nombres aléatoires est un générateur de nombres pseudo-aléatoires, et dans lequel la génération du nombre aléatoire consiste à saisir le résultat de mesure en tant que nombre de départ dans le générateur de nombres pseudo-aléatoires pour générer un nombre pseudo-aléatoire.

8. Procédé selon la revendication 7, consistant à mesurer la résistance électrique du corps d'un utilisateur pour générer une pluralité de résultats de mesure, chaque résultat de mesure correspondant à la résistance électrique du corps de l'utilisateur à un moment différent, dans lequel la génération du nombre aléatoire consiste à saisir un deuxième résultat de mesure parmi la pluralité de résultats de mesure en tant que nombre de départ dans le générateur de nombres pseudo-aléatoires pour générer un deuxième nombre pseudo-aléatoire.
